# EUROPÄISCHE PATENTANMELDUNG

(11) **EP 2 371 731 A1**
(43) Veröffentlichungstag der Anmeldung: **05.10.2011**
(21) Anmeldenummer: 10158662.6
(22) Anmeldetag: 31.03.2010
(51) Int. Cl.: B65D 47/08, B01L 3/00, G01N 35/10

(54) **Reagenz-Kit mit Transportsicherung**

(71) Anmelder: Roche Diagnostics GmbH, 68305 Mannheim (DE); F. Hoffmann-La Roche AG, 4070 Basel (CH)
(72) Erfinder: Die Erfindernennung liegt noch nicht vor
(74) Vertreter: Tiesmeyer, Johannes

(57) **Zusammenfassung**

Die vorliegende Erfindung betrifft ein Reagenz-Kit (10), umfassend: eine Reagenzbehälter-Anordnung (15) mit wenigstens einem Reagenzbehälter (12) zum Aufnehmen einer Substanz, welcher wenigstens einen Behälterkörper (13) und wenigstens einen dem Behälterkörper zugeordneten und an diesem anbringbaren oder vorgesehenen Verschluss (14) umfasst, wobei der Verschluss. (14) einen Verschluss-Grundkörper (16) und einen Deckel (18) umfasst, der zumindest zwischen einer geschlossenen Deckelposition und einer weiteren Deckelposition bewegbar am Verschluss-Grundkörper (16) gelagert ist, sowie
eine Transportsicherung (66), die in einer Verriegelungsposition an der Reagenzbehälter-Anordnung (15) anbringbar oder angebracht ist und die von der Verriegelungsposition in eine Freigabeposition relativ zu der Reagenzbehälter-Anordnung (15) bewegbar ist, wobei die Transportsicherung (66) dazu ausgebildet ist, in der Verriegelungsposition den Deckel (18) in der geschlossenen Deckelposition zu fixieren, wobei durch ein Bewegen der Transportsicherung (66) von der Verriegelungsposition in die Freigabeposition relativ zu der Reagenzbehälter-Anordnung (15) der Deckel (18) von der geschlossenen Deckelposition in die weitere Deckelposition bewegt wird.

## Beschreibung

Die vorliegende Erfindung betrifft ein Reagenz-Kit, welches eine Reagenzbehälter-Anordnung mit wenigstens einem Reagenzbehälter zum Aufnehmen einer Substanz umfasst, welcher wenigstens einen Behälterkörper und wenigstens einen dem Behälterkörper zugeordneten und an diesem anbringbaren oder vorgesehenen Verschluss aufweist, wobei der Verschluss einen Verschluss-Grundkörper und einen Deckel umfasst, der zumindest zwischen einer geschlossenen Deckelposition und einer weiteren Deckelposition bewegbar am Verschluss-Grundkörper gelagert ist. Weiter umfasst das Reagenz-Kit eine Transportsicherung, die in einer Verriegelungsposition an der Reagenzbehälter-Anordnung anbringbar oder angebracht ist und die von der Verriegelungsposition in eine Freigabeposition relativ zu der Reagenzbehälter-Anordnung bewegbar ist, wobei die Transportsicherung in der Verriegelungsposition den Deckel in der geschlossenen Deckelposition fixiert.

Der Reagenzbehälter ist dabei zum Aufnehmen einer vorzugsweise flüssigen Substanz ausgebildet. Die Erfindung betrifft jedoch Reagenz-Kits unabhängig von der Frage, ob der Reagenzbehälter mit einer Substanz befüllt ist oder nicht.

Es kann vorgesehen sein, dass der Verschluss einteilig mit dem Behälterkörper ausgebildet ist. Um die Herstellung der Reagenzbehälter zu vereinfachen, insbesondere im Spritzgussverfahren, kann jedoch auch vorgesehen sein, dass der Verschluss separat vom Behälterkörper ausgebildet und an diesem anbringbar ist, beispielsweise durch Aufschrauben oder Einklipsen. Ebenso können der Verschluss-Grundkörper und der Deckel einteilig oder separat ausgebildet sein.

Reagenzbehälter kommen insbesondere im Bereich der automatischen Analyse zum Einsatz. Systeme zur automatischen Analyse, beispielsweise diagnostische Assay-Systeme, benötigen mehrere, unterschiedliche Reagenzien (Substanzen) für die Testdurchführung. Diese Reagenzien werden üblicherweise in Einzelbehälter abgefüllt, gekennzeichnet und ggf. werden mehrere Einzelbehälter mit unterschiedlichen, aufeinander kalibrierten Reagenzien zu einer Reagenzbehälter-Anordnung für einen bestimmten Test zusammengestellt.

Um zu gewährleisten, dass auch während des Transports zum Anwender die Substanzen nicht aus den Reagenzbehältern austreten, werden die Reagenzbehälter-Anordnungen üblicherweise mit einer Transportsicherung versehen.

Aus den Druckschriften EP 1424291 A1, EP 1424292 A1, WO 95/01919 A1 und EP 0543638 A1 sind beispielsweise Reagenz-Kits bekannt, die jeweils einen separaten Schraubdeckel umfassen, der anstelle des für den Analysebetrieb vorgesehenen Verschlusses auf den jeweiligen Behälterkörper aufgeschraubt werden kann und in seiner Verriegelungsposition, also im aufgeschraubtem Zustand, auch während des Transports vom Hersteller zum Anwender ein Austreten der Substanz aus dem Behälterkörper verhindert.

Erst beim Anwender werden bei diesen Reagenz-Kits die Transportsicherungs-Schraubdeckel durch die Verschlüsse ersetzt, die während der automatischen Analyse auf den Behälterkörper verbleiben und von dem automatischen Analysesystem geöffnet und ggf. auch wieder geschlossen werden können.

Die Druckschriften US 5,632,399 B und WO92/20449 beschreiben gattungsgemäße Reagenz-Kits, bei welchen sich der Verschluss bereits während des Transports auf dem Behälterkörper befindet und der Reagenzbehälter zusätzlich durch die Transportsicherung gesichert ist, die in der Verriegelungsposition den Deckel des Verschlusses in der geschlossenen Deckelposition fixiert.

Die US 5,632,399 B beschreibt eine Reagenzbehälter-Anordnung aus mehreren Reagenzbehältern, die durch einen gemeinsamen Schiebedeckel geöffnet und geschlossen werden können, wobei die Reagenzbehälter-Anordnung während des Transports durch eine abziehbare Folie als Transportsicherung gesichert wird.

Die Druckschrift WO92/20449 beschreibt einen Reagenzbehälter mit einem Verschluss, in den eine zusätzliche Verschlussplatte für den Transport eingesetzt werden kann.

Vor der Verwendung der vorstehend beschriebenen Reagenzbehälter-Anordnungen in einem automatischen Analysesystem ist es zweckmäßig, den Deckel des Verschlusses zumindest einmal aus der geschlossenen Deckelposition heraus zu bewegen, also eine Initial-Öffnung durchzuführen, um beispielsweise unterschiedliche Druckverhältnisse innerhalb und außerhalb des Behälters auszugleichen und so ein leichtes Öffnen des Reagenzbehälters im automatisierten Analysebetrieb zu ermöglichen.

Diese Initial-Öffnung kann grundsätzlich durch das Analysesystem oder durch den Anwender erfolgen.

Nachteil einer Initial-Öffnung durch das Analysesystem ist die dabei aufzuwendende, verhältnismäßig hohe Kraft, welche eine entsprechend aufwändige und teure Öffnungsmechanik des Analysesystems erfordert und die Gestaltung des Analysesystems im Hinblick auf die Größe und Positionierung der einzelnen Elemente einschränkt. Weiterhin würde eine Störung oder ein Ausfall der Mechanik zur Initial-Öffnung eine Störung bzw. einen Ausfall des gesamten Analysesystems bedeuten.

Die Initial-Öffnung der einzelnen Behälter durch den Anwender, etwa unmittelbar vor dem Einsetzen der Reagenzbehälter-Anordnung in das Analysesystem, ist ebenso zeitaufwändig und zusätzlich fehleranfällig. Wenn der Anwender beispielsweise die Transportsicherung nicht oder nicht vollständig entfernt, kann sogar das Analysesystem beschädigt werden.

Daher ist es Aufgabe der vorliegenden Erfindung, die vorstehend beschriebene Initial-Öffnung zu erleichtern.

Diese Aufgabe wird gelöst, indem bei einem gattungsgemäßen Reagenz-Kit durch ein Bewegen der Transportsicherung relativ zur Reagenzbehälter-Anordnung von der Verriegelungsposition in die Freigabeposition der Deckel von der geschlossenen Deckelposition in die weitere Deckelposition bewegt wird.

Auf diese Weise wird die ohnehin notwendige Entriegelung der Transportsicherung bzw. deren Entfernung mit der Initial-Öffnung kombiniert, so dass der Anwender vor dem Einsetzen des erfindungsgemäßen Reagenz-Kits in das Analysesystem lediglich die Transportsicherung entriegeln und ggf. entfernen muss.

Grundsätzlich kann dabei vorgesehen sein, dass die Transportsicherung in der Freigabeposition auf der Reagenzbehälter-Anordnung verbleibt, so dass Reagenzbehälter-Anordnung und Transportsicherung auch im Analysebetrieb als Einheit gehandhabt werden können.

Da auf automatisierten Analysesystemen jedoch stets möglichst viele Reagenz-Kits eingesetzt werden sollen, um eine hohe Anzahl von verschiedenen Tests zu ermöglichen, und die Transportsicherung das Gesamtvolumen des Reagenz-Kits vergrößert, kann es aus Gründen der Platzersparnis vorteilhaft sein, dass die Transportsicherung aus der Freigabeposition heraus von der Reagenzbehälter-Anordnung entfernbar ist, so dass die Reagenzbehälter-Anordnung ohne die Transportsicherung in das Analysesystem eingesetzt werden kann.

Die Transportsicherung kann in einer anderen Ausführungsform so ausgebildet sein, dass das Reagenz-Kit, dann, wenn sich die Transportsicherung in der Verriegelungsposition befindet, bestimmten Anforderungen an die Dichtigkeit der Behälter genügt, etwa um Luftfrachtanforderungen zu erfüllen, beispielsweise 660 mbar Differenzdruck über 10 Minuten.

Bei einfacheren Reagenzbehälter-Anordnungen ist der Deckel zwischen der geschlossenen Deckelposition und einer geöffneten Position verstellbar. In diesem Fall kann vorgesehen sein, dass die weitere Deckelposition eine geöffnete Position des Deckels ist.

Reagenzbehälter-Anordnungen verbleiben üblicherweise mehrere Wochen auf einem Gerät zur automatischen Analyse. Über diesen Zeitraum muss sichergestellt sein, dass nicht zu viel von der eingefüllten Substanz durch Verdunstung entweicht. Für bestimmte Reagenztypen ist auch der Gasaustausch (CO₂-Eintrag) aus der Umgebungsluft auf ein Minimum zu begrenzen.

Um einen ausreichenden Verdunstungsschutz zu gewährleisten, sind Reagenzbehälter bekannt, etwa aus der DE 4439755 A1 oder der US 5,540,890 B, bei welchen außer der geschlossenen Deckelposition und einer geöffneten Deckelposition auch eine Verdunstungsschutzposition des Deckels vorgesehen ist, bei welcher der Deckel nur leicht auf dem Verschluss-Grundkörper bzw. einem Hals des Behälterkörpers aufliegt.

Für solche Behälter kann vorgesehen sein, dass die weitere Deckelposition eine Verdunstungsschutzposition ist, und die geschlossene Deckelposition eine Transportsicherungsposition ist, wobei der Deckel zwischen der Transportsicherungsposition, der Verdunstungsschutzposition und der geöffneten Deckelposition bewegbar am Grundkörper gelagert ist.

Mit der Entfernung der Transportsicherung durch den Anwender wird dabei gleichzeitig der Deckel aus der Transportsicherungsposition heraus und in die Verdunstungsschutzposition hinein bewegt, aus welcher das automatische Analysesystem den Deckel mit geringem Kraftaufwand in die geöffnete Position verstellen kann.

Es kann vorgesehen sein, dass in der Transportsicherungsposition der Deckel so fest auf dem Verschluss-Grundkörper bzw. einem Hals des Behälterkörpers aufliegt oder mit diesem verrastet ist, dass auch dann, wenn der Reagenzbehälter umfällt, keine Substanz austreten kann. Wird ein Reagenzbehälter längere Zeit nicht benötigt, kann er jederzeit durch Verstellen des Deckels in die Transportsicherungsposition auf einfache Weise wieder sicher verschlossen werden.

Um während des Betriebs des Analysesystems eine Verdunstung zu verringern, ohne dass einmal geöffnete Reagenzbehälter vom Analysesystem selbst geschlossen werden müssen, kann das Reagenz-Kit weiter Vorspann-Mittel umfassen, welche den Deckel von der geöffneten Deckelposition in die Verdunstungsschutzposition bzw. im Fall von nur zwei ausgezeichneten Deckelpositionen von der geöffneten Deckelposition in die geschlossene Deckelposition vorspannen. Somit wird ein mechanisch selbstschließender Deckel erhalten.

Diese Vorspann-Mittel können zur vorteilhaften Reduktion der Anzahl der benötigten Bauteile einteilig mit dem Verschluss-Grundkörper ausgebildet sein. Auf diese Weise kann ein Verschluss erhalten werden, der aus nur zwei Teilen aufgebaut ist. Es ist jedoch auch möglich, die Vorspannmittel gesondert auszuführen und am Reagenz-Kit vorzusehen. Alternativ können solche Vorspannmittel auch im Analysesystem integriert sein, beispielsweise an der Aufnahme für eine Reagenzbehälter-Anordnung.

Eine einfache Öffnungsmechanik kann dadurch erhalten werden, dass der Deckel um eine Deckelachse schwenkbar am Grundkörper gelagert ist.

Im Falle von schwenkbar gelagerten Deckeln kann die Transportsicherung auf konstruktiv einfache Weise dadurch realisiert werden, dass die Transportsicherung durch Verschieben relativ zu der Reagenzbehälter-Anordnung in eine Entriegelungsrichtung von der Verriegelungsposition in die Freigabeposition bewegbar ist, wobei die Transportsicherung für jeden Deckel wenigstens ein rampenartig ausgebildetes Eingriffselement und der Deckel wenigstens ein Gegeneingriffselement umfasst, das so mit dem Eingriffselement zusammenwirkt, dass beim Verschieben der an der Reagenzbehälter-Anordnung angebrachten Transportsicherung aus der Verriegelungsposition in die Entriegelungsrichtung das Eingriffselement und das Gegeneingriffselement in einem Gleitanlageeingriff miteinander stehen oder in einen Gleitanlageeingriff gelangen, so dass durch Verschieben der Transportsicherung in die Entriegelungsrichtung in die Freigabeposition der Deckel von der geschlossenen Deckelposition in die weitere Deckelposition bewegbar ist.

Während die Transportsicherung aus der Verriegelungsposition in die Freigabeposition verschoben wird, kann das rampenartig ausgebildete Eingriffselement das Gegeneingriffselement und damit den Deckel auf einfache Weise anheben und in die weitere Deckelposition, beispielsweise die geöffnete Deckelposition oder die Verdunstungsschutzposition verschwenken.

Ein weiterer Vorteil dieser Konstruktion liegt in der einfachen Bedienbarkeit durch den Anwender, der die Transportsicherung lediglich auf der Reagenzbehälter-Anordnung verschieben muss, so dass mit einem einzigen Handgriff die Transportsicherung entriegelt, ggf. entfernt und die Initial-Öffnung vorgenommen werden kann.

Für einen Deckel können auch mehrere Eingriffselemente an der Transportsicherung und zugehörige Gegeneingriffselemente am jeweiligen Deckel vorgesehen sein, um ein Verkanten bei der Initial-Öffnung zu vermeiden. Beispielsweise können am Deckel zwei an entgegengesetzten Seiten parallel zur Deckelachse vom Deckel vorstehende Eingriffslaschen als Eingriffselemente vorgesehen sein.

Üblicherweise werden mehrere unterschiedliche Reagenzien für einen bestimmten Test benötigt und vor der Auslieferung an den Kunden zu einem Test-Kit zusammengesetzt. Daher umfasst gemäß einer vorteilhaften Weiterbildung der vorliegenden Erfindung die Reagenzbehälter-Anordnung mehrere Reagenzbehälter, vorzugsweise 3 bis 5 Reagenzbehälter, wobei durch das Bewegen der Transportsicherung von der Verriegelungsposition in die Freigabeposition die Deckel der Reagenzbehälter jeweils von der Transportsicherungsposition in die weitere Deckelposition, beispielsweise eine Verdunstungsschutzposition bewegt werden. Vorzugsweise handelt es sich um gleich oder ähnlich aufgebaute Reagenzbehälter.

Die für einen Test benötigten Reagenzbehälter können so auf vorteilhafte Weise sowohl beim Transport als auch beim Einsetzen in das Analysesystem als Einheit gehandhabt werden.

Dabei kann vorgesehen sein, dass die Reagenzbehälter in einer Reihe entlang der Entriegelungsrichtung angeordnet sind, wobei die Deckelachsen der an den Reagenzbehältern angebrachten oder vorgesehenen Deckel im Wesentlichen orthogonal zur Entriegelungsrichtung verlaufen.

Auf diese Weise können in die Entriegelungsrichtung länglich ausgebildete Reagenz-Kits erhalten werden, von denen eine Vielzahl beispielsweise auf einem Drehteller eines Analysesystems in platzsparender Weise angeordnet werden können.

Es soll aber auch nicht ausgeschlossen werden, dass die Reagenzbehälter-Anordnung nur einen Reagenzbehälter umfasst.

Zur Vereinfachung der Handhabung, insbesondere im Falle mehrerer zu einer Reagenzbehälter-Anordnung zusammengesetzter Reagenzbehälter kann vorgesehen sein, dass die Reagenzbehälter-Anordnung weiter eine Reagenz-Kassette umfasst, an welcher der bzw. die Reagenzbehälter anbringbar oder vorgesehen ist bzw. sind.

Die vorliegende Erfindung wird im Folgenden anhand eines bevorzugten Ausführungsbeispiels erläutert, das in den beiliegenden Figuren dargestellt ist.

Dabei zeigen
- Fig. 1: die Einzelteile eines Reagenzbehälters eines ersten Ausführungsbeispiels der vorliegenden Erfindung in einer perspektivischen Darstellung,
- Fig. 2: den Gegenstand von Fig. 1 im zusammengesetzten Zustand,
- Fig. 3: eine vergrößerte Darstellung der Einzelteile des Verschlusses aus Fig. 1,
- Fig. 4: eine andere Ansicht des Verschluss-Grundkörpers von Fig. 3,
- Fig. 5: eine vereinfachte Darstellung von Teilen des Verschlusses und des Reagenzbehälters von Fig. 1 in einer Seitenansicht zur Illustration der Transportsicherungsposition,
- Fig. 6: den Gegenstand von Fig. 5 zur Illustration der Verdunstungsschutzposition,
- Fig. 7: den Gegenstand von der Fig. 5 mit durch das Analysesystem leicht geöffneten Deckel
- Fig. 8: den Gegenstand von Fig. 7 mit maximal geöffneten Deckel,
- Fig. 9: eine perspektivische Darstellung des ersten Ausführungsbeispiels,
- Fig. 10: die Reagenzkassette aus Fig. 9 in einer anderen Ansicht,
- Fig. 11: die Transportsicherung aus Fig. 9 in einer anderen Ansicht,
- Fig. 12: den Gegenstand von Fig. 9 mit an der Reagenzbehälter-Anordnung in der Verriegelungsposition angebrachter Transportsicherung,
- Fig. 13: den Gegenstand von Fig. 12, wobei ein Teil der Transportsicherung entfernt wurde,
- Fig. 14: einen Ausschnitt des Gegenstandes von der Fig. 12 mit teilweise entfernter Transportsicherung,
- Fig. 15: den Gegenstand von Fig. 14, wobei sich die Transportsicherung zwischen der Verriegelungsposition und der Freigabeposition befindet und
- Fig. 16: den Gegenstand von Fig.15, wobei sich die Transportsicherung in der Freigabeposition befindet.

Aus Gründen der Übersichtlichkeit sind nicht in allen Figuren alle Bestandteile mit Bezugszeichen versehen, sondern diejenigen, die zur Erläuterung der jeweiligen Figur verwendet werden. Insbesondere ist bei mehreren gleichartigen Bauteilen nicht immer jedes Bauteil mit einem Bezugszeichen gekennzeichnet.

Begriffe wie "oben" und "unten" beziehen sich im folgenden auf einen Reagenzbehälter in seiner normalen Betriebsposition.

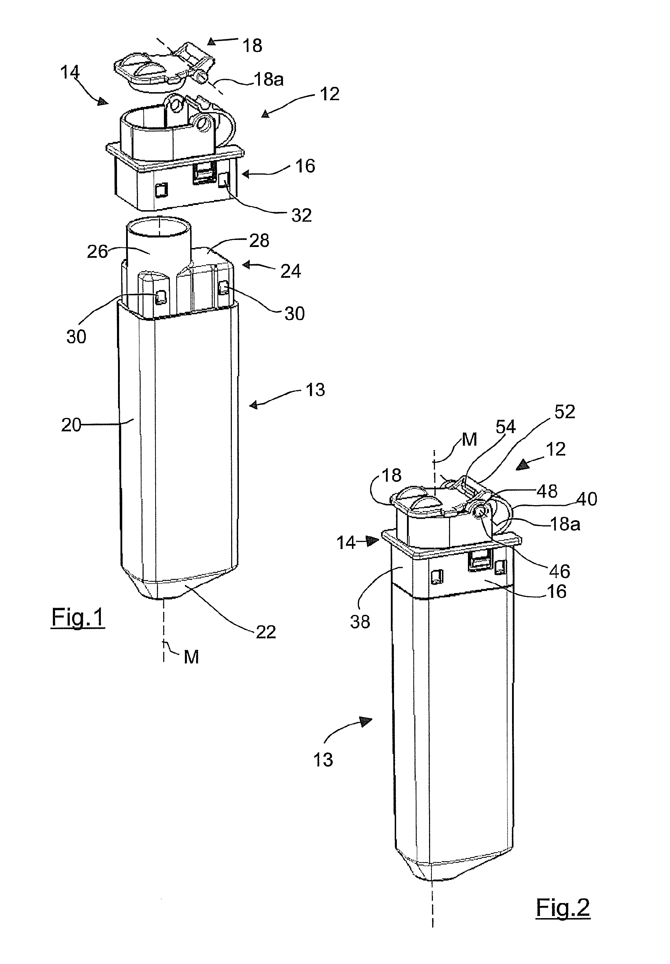

Fig. 1 zeigt die Einzelteile eines Reagenzbehälters 12 eines bevorzugten Ausführungsbeispiels der vorliegenden Erfindung, nämlich einen Behälterkörper 13, sowie einen Verschluss 14, welcher einen Grundkörper 16 und einen um eine Deckelachse 18a schwenkbar an dem Grundkörper 16 anbringbaren Deckel 18 umfasst.

Bei den Einzelteilen 13, 16 und 18 kann es sich jeweils z.B. um Spritzgussteile, Blasformteile oder Spritzblasteile aus einem geeigneten Kunststoff handeln.

Der Behälterkörper 13 umfasst einen im Wesentlichen quaderförmig ausgebildeten Mittelbereich 20, einen sich zum unteren Ende des Behälterkörpers 13 hin verjüngenden Bodenbereich 22 und einen oberen Endbereich 24 mit einem hohlzylindrischen Hals 26 und einem quaderförmigen Anschluss-Teil 28, an welchem vier Rasthaken 30 bzw. Rastvorsprünge vorgesehen sind, die in entsprechende Rastfenster 32 des Verschluss-Grundkörpers 16 einrasten können, so dass der Verschluss-Grundkörper 16 auf das Anschluss-Teil 28 des Behälterkörpers 13 aufgeklipst werden kann.

Um das Totvolumen des Reagenzbehälters 12 zu minimieren, also das Volumen, in welchem Substanz verbleibt, die durch eine Pipette des Analysesystems nicht aus dem Reagenzbehälter 12 entnommen werden kann, verjüngt sich der Bodenbereich 22 zum unteren Ende des Behälterkörper 13 hin so, dass die Mittelachse M des hohlzylindrischen Halses 26 durch den tiefsten Punkt des Behälterkörpers 13 verläuft.

Die Quader-Form des Mittelbereichs 20 ist vorteilhaft, um mehrere Reagenzbehälter auf Platz sparende Weise neben- bzw. hintereinander anordnen zu können, sowie um gegebenenfalls Informationen über in die Reagenzbehälter 12 abgefüllte Substanzen auf die Wände des Mittelbereichs 20 aufbringen zu können. Dies kann erfolgen, indem der Reagenzbehälter 12, insbesondere der Mittelbereich 20 mit Farbe oder einem Code (Barcode) besprüht oder bedruckt wird, oder indem geeignete Etiketten aufgebracht werden. Die Informationen können beispielsweise die eingefüllte Substanz oder/und eine Chargenkennung bzw. Chargennummer umfassen. Auf diese Weise wird eine manuelle oder automatisierte Konfektionierung von mehreren Reagenzbehältern zu einem Test-Kit ermöglicht.

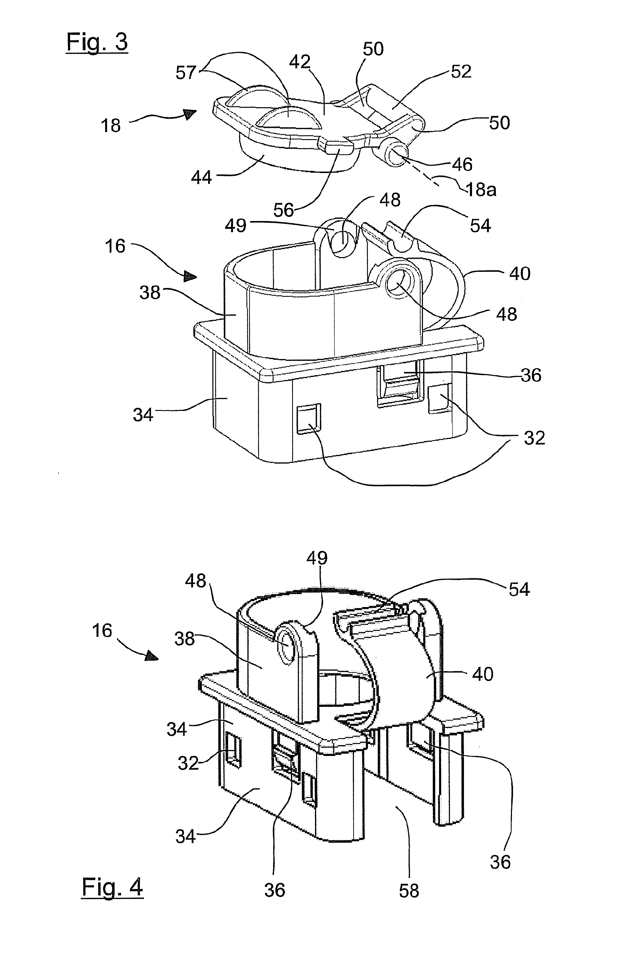

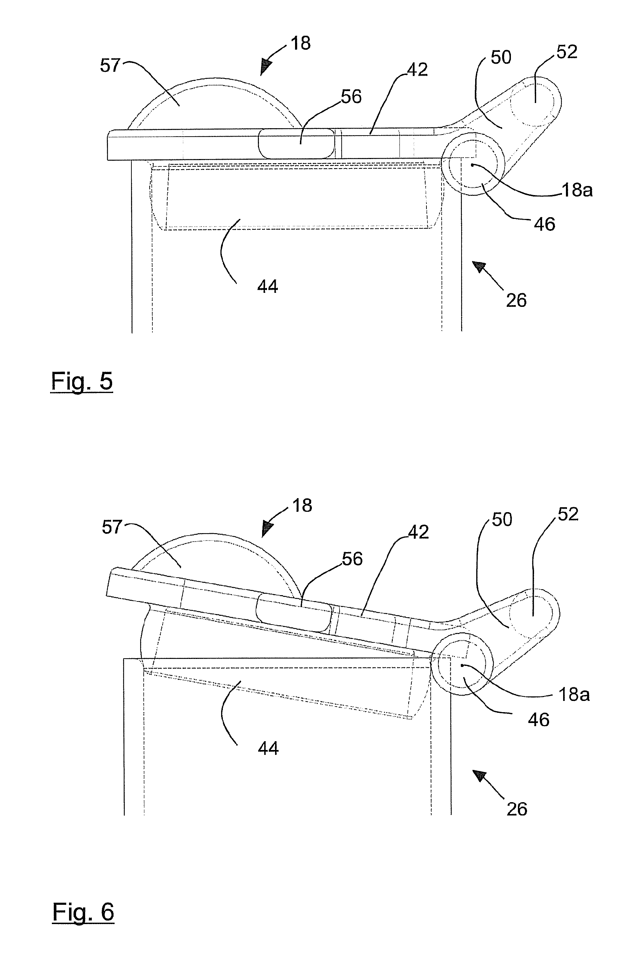

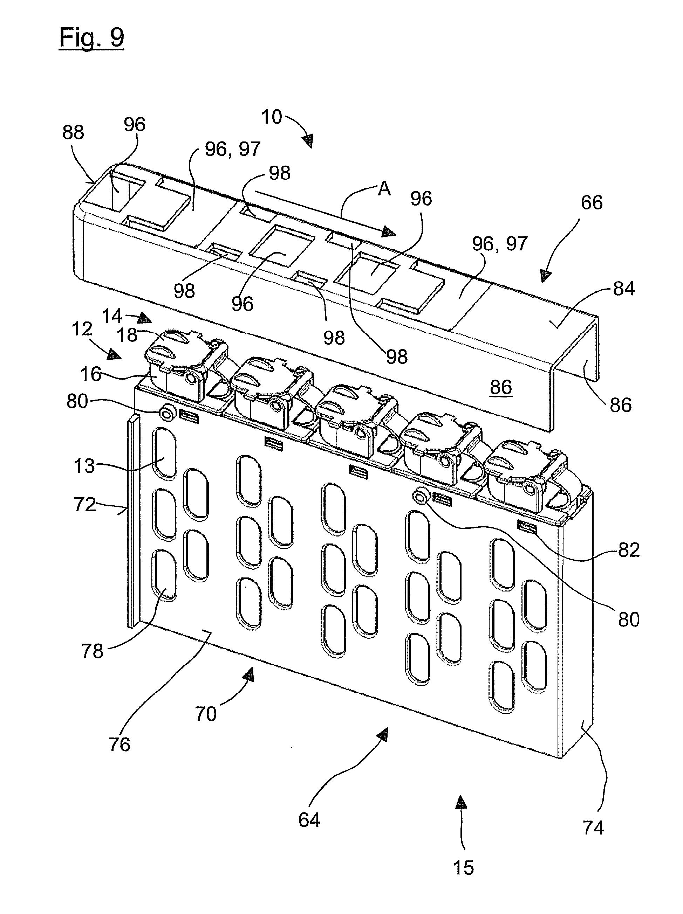

Der Verschluss-Grundkörper 16, der genauer in den Figuren 3 und 4 dargestellt ist, umfasst einen unteren Anschlussrahmen 34, in welchem die Rastfenster 32 sowie zwei Rasthaken 36 zur Befestigung des Reagenzbehälters 12 in einer Reagenzkassette (vgl. Fig. 9) vorgesehen sind, sowie eine Deckel-Halterung 38, an welcher der Deckel 18, drehbar um die Deckelachse 18a gelagert, eingesetzt werden kann, und Vorspann-Mittel 40, welche hier als U-förmiges Federelement ausgebildet sind und im zusammengesetzten Zustand des Reagenzbehälters 12 den Deckel 18 in die in Fig. 6 gezeigte Verdunstungsschutzposition vorspannen. Im vorliegenden Fall ist der Verschluss-Grundkörper 16 mit seinen vorstehend erläuterten Bestandteilen, also insbesondere dem Anschlussrahmen 34, der Deckel-Halterung 38 und den Vorspannmitteln 40 einteilig ausgebildet. Es ist jedoch auch möglich, diese Bestandteile separat herzustellen und zum Verschluss-Grundkörper 16 zusammenzusetzen.

Weiterhin ist in der Darstellung von Figur 4 zu erkennen, dass im unteren Anschlussbereich 34 unterhalb der Vorspann-Mittel 40 eine im vorliegenden Fall fertigungsbedingte Aussparung 58 vorgesehen ist. Diese ist jedoch nicht zwingend erforderlich.

Wie Figur 3 zeigt, umfasst der Deckel 18 eine Verschlussplatte 42, eine ringförmige Dichtung 44, zwei etwa parallel zur Oberfläche der Verschlussplatte 42 verlaufende Achszapfen 46, die die Deckelachse 18a definieren und in zwei Lagerlöcher 48 der Deckelhalterung 38 eingesetzt werden können, sowie zwei in einem stumpfen Winkel von der Verschlussplatte 42 weg vorstehende Hebelarme 50, die durch eine Querstange 52 miteinander verbunden sind. Die Querstange 52 kann in eine entsprechend ausgebildete Klaue 54 eingepasst werden, die an den Vorspann-Mitteln 40 vorgesehen ist. Um das Einsetzen der Achszapfen 46 des Deckels 18 in die Lagerlöcher 48 der Deckelhalterung 38 zu erleichtern, sind in der Deckelhalterung 38 oberhalb der Lagerlächer 48 Einführschrägen 49 vorgesehen.

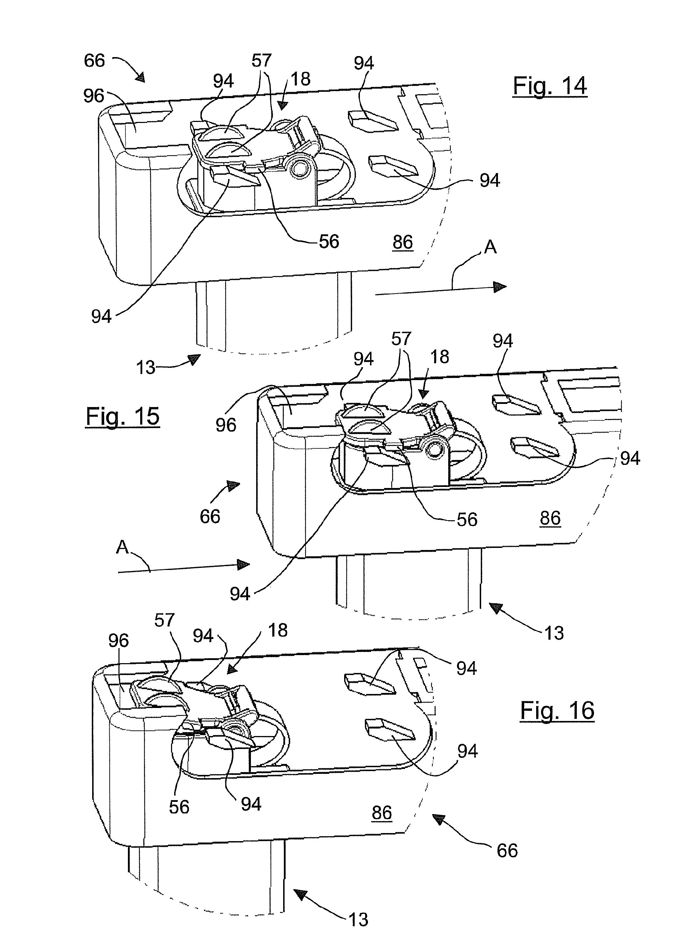

Weiterhin umfasst der Deckel 18 zwei etwa parallel zur Deckelachse 18a von der Verschlussplatte 42 weg abstehende Gegeneingriffselemente 56 in Form von Eingriffslaschen sowie zwei Kreissegment-Platten-förmige und etwa senkrecht zur Verschlussplatte 42 nach oben von dieser weg stehende Fixierungs-Elemente 57. Die Funktion der Gegeneingriffselemente 56 und der Fixierungs-Elemente 57 wird nachfolgend anhand der Figuren 14 bis 16 genauer erläutert.

Fig. 2 zeigt den Reagenzbehälter 12 von Fig. 1 im zusammengesetzten Zustand. Dabei ist der Verschluss-Grundkörper 16 auf den Behälterkörper 13 aufgeklipst, die Achszapfen 46 des Deckels 18 sind in die entsprechenden Lagerlöcher 48 der Deckelhalterung 38 eingesetzt und die Querstange 52 ist in die Klaue 54 der Vorspann-Mittel 40 eingepasst.

Der Deckel 18 befindet sich in dem in Fig. 2 dargestellten Zustand in der Transportsicherungsposition, in welcher der Deckel 18 so fest auf dem hohlzylindrischen Flaschenhals 26 aufliegt, dass auch dann, wenn der Reagenzbehälter 12 umfallen würde, keine Substanz aus diesem austreten könnte.

Fig. 5 zeigt eine Seitenansicht des Deckels 18 und des hohlzylindrischen Flaschenhalses 26 in einer schematischen und etwas vereinfachten Darstellung, wobei der Deckel 18 sich in Transportsicherungsposition befindet. In der Figur sind verdeckte Elemente gestrichelt dargestellt, um einen Blick in das Innere der Struktur zu ermöglichen. Aus Gründen der Übersichtlichkeit wurde auf eine Darstellung des Verschluss-Grundkörpers 16 verzichtet.

Wie der Figur zu entnehmen ist, ist die Dichtung 44 leicht konvex gewölbt. Daher schließt der Deckel 18 in der dargestellten Transportsicherungsposition den hohlzylindrischen Flaschenhals 26 und damit den Reagenzbehälter 12 dicht ab.

Fig. 6 zeigt den Gegenstand von Fig. 5, wobei sich der Deckel 18 in der Verdunstungsschutzposition befindet. Dabei liegt die Dichtung 44 nur leicht am Rand des hohlzylindrischen Flaschenhalses 26 auf, was ausreicht, um ein Verdunsten von in den Behälter 12 eingefüllter Substanz zu verhindern, gleichzeitig aber ein Öffnen des Deckels 18 mit geringem Kraftaufwand ermöglicht.

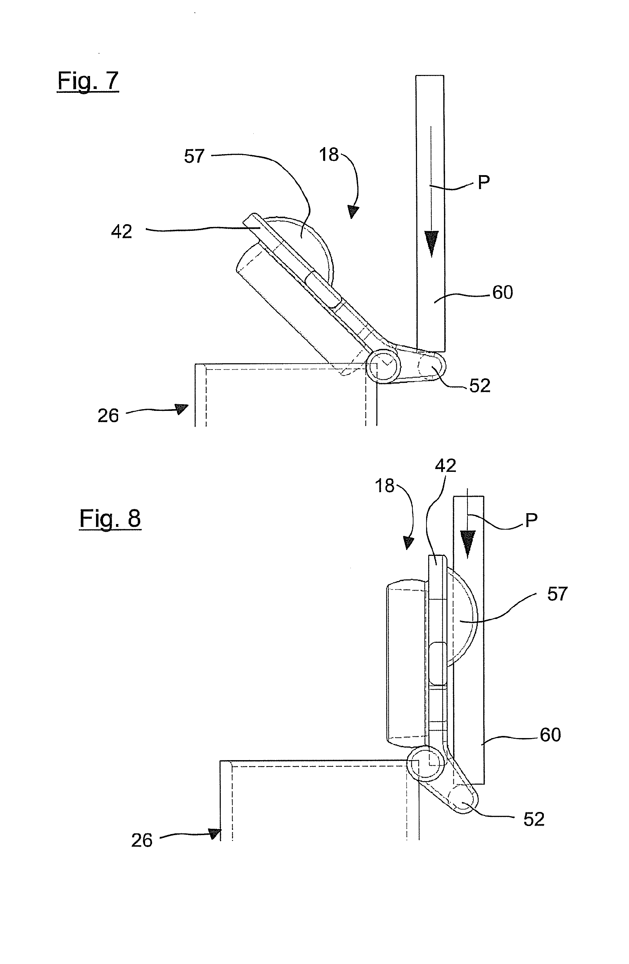

Wie in den Figuren 7 und 8 illustriert ist, kann der Reagenzbehälter 12 durch einen Stößel 60 eines hier ansonsten nicht weiter dargestellten Öffnungsmechanismus eines Analysesystems geöffnet werden, indem der Stößel 60 die Querstange 52 des Deckels 18 in die durch einen Pfeil P bezeichnete Richtung hinunter drückt.

Fig. 7 zeigt den Deckel 18 in einer leicht geöffneten, Fig. 8 zeigt den Deckel 18 in der maximal geöffneten Position, in welcher die Verschlussplatte 42 um annähernd 90° gegenüber der Transportsicherungsposition verschwenkt ist. Die Fixierungs-Elemente 57 sind so auf der Verschlussplatte 42 angeordnet, dass der Stößel 60 des Analysesystems bei maximal geöffnetem Deckel 18 genau zwischen den zwei Fixierungs-Elementen 57 hindurch verläuft.

In dem in Figur 8 dargestellten Zustand kann nun vom Analysesystem, üblicherweise durch eine Pipette, Substanz aus dem Reagenzbehälter 12 entnommen und für einen Test verwendet werden.

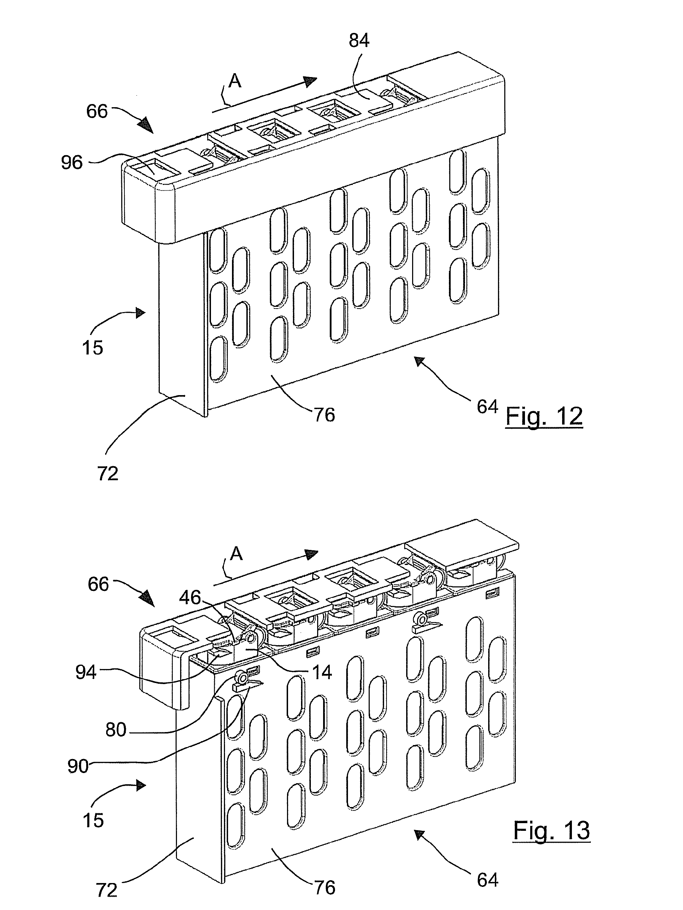

Fig. 9 zeigt eine perspektivische Darstellung des erfindungsgemäßen Reagenz-Kits 10, welches eine Reagenzbehälter-Anordnung 15 aus im vorliegenden Fall fünf im Wesentlichen gleichartigen Reagenzbehältern 12 und eine Reagenzkassette 64 umfasst, in die die Reagenzbehälter 12 eingesetzt und an der diese befestigt sind, sowie eine Transportsicherung 66 umfasst, die an der Reagenzbehälter-Anordnung 15 in einer Verriegelungsposition angebracht werden kann (vgl. Fig. 12), in welcher die Transportsicherung 66 die Deckel 18 jeweils in der Transportsicherungsposition fixiert. In der Darstellung von Figur 9 ist die Transportsicherung 66 (noch) nicht an der Reagenzbehälter-Anordnung 15 angebracht.

Die Reagenzkassette 64 umfasst einen Kassetten-Rahmen 70 mit einer Stirnwand 72, einer Rückwand 74 und zwei Seitenwänden 76. Die Stirnwand 72 kann gegenüber der Rückwand 74 verbreitert ausgebildet sein, um Informationen in Form eines Aufdrucks oder/und Etiketts oder/und RFID-Chips oder in ähnlicher Form darauf aufzubringen. Die Verbreiterung der Stirnwand 72 kann alternativ oder zusätzlich auch als Orientierungsstruktur für eine korrekte Positionierung der Reagenzkassette 64 in einem Analysesystem dienen.

In jeder der Seitenwände 76 sind Öffnungen 78 vorgesehen, die dazu dienen, einen thermischen Ausgleich zwischen den in die Reagenzbehälter 12 eingefüllten Substanzen und der Umgebung zu beschleunigen. Im hier dargestellten Ausführungsbeispiel haben diese Öffnungen die Form von abgerundeten Rechtecken. Anzahl, Form und Anordnung der Öffnungen 78 können aber von dem hier dargestellten Ausführungsbeispiel abweichen. Insbesondere ist auch eine Reagenzkassette ohne derartige Öffnungen möglich.

Weiter sind an jeder Seitenwand 76 zwei zylindrische Eingriffs-Vorsprünge 80 vorgesehen, die annähernd orthogonal von den Seitenwänden 76 nach außen (das heißt vom Inneren der Reagenzkassette 64 weg) vorstehen.

Wie nachfolgend genauer beschrieben wird, dienen diese Eingriffs-Vorsprünge 80 zur Befestigung der Transportsicherung 66 an der Reagenzkassette 64 und damit an der Reagenzbehälter-Anordnung 15.

Schließlich ist in jeder Seitenwand 76 für jeden Reagenzbehälter 12 jeweils ein Rastfenster 82 vorgesehen, in welches der jeweilige Rast-Haken 36 des Verschluss-Grundkörpers 16 eingreifen kann.

Die Transportsicherung 66 hat im Wesentlichen die Form einer Hohl-ProfilSchiene mit U-förmigem Querschnitt und einem geschlossenen Ende, d.h. sie umfasst eine obere Deckplatte 84 mit verschiedenen, darin vorgesehenen Ausnehmungen 96, 97, 98, die nachfolgend noch näher beschrieben werden, sowie zwei Seitenplatten 86 und eine Stirnplatte 88. Das der Stirnplatte 88 gegenüberliegende Ende der Transportsicherung 66 sowie deren Unterseite ist offen, so dass die Transportsicherung 66 durch Aufschieben auf die Reagenzkassette 64 in die durch einen Pfeil A bezeichnete Richtung angebracht werden kann.

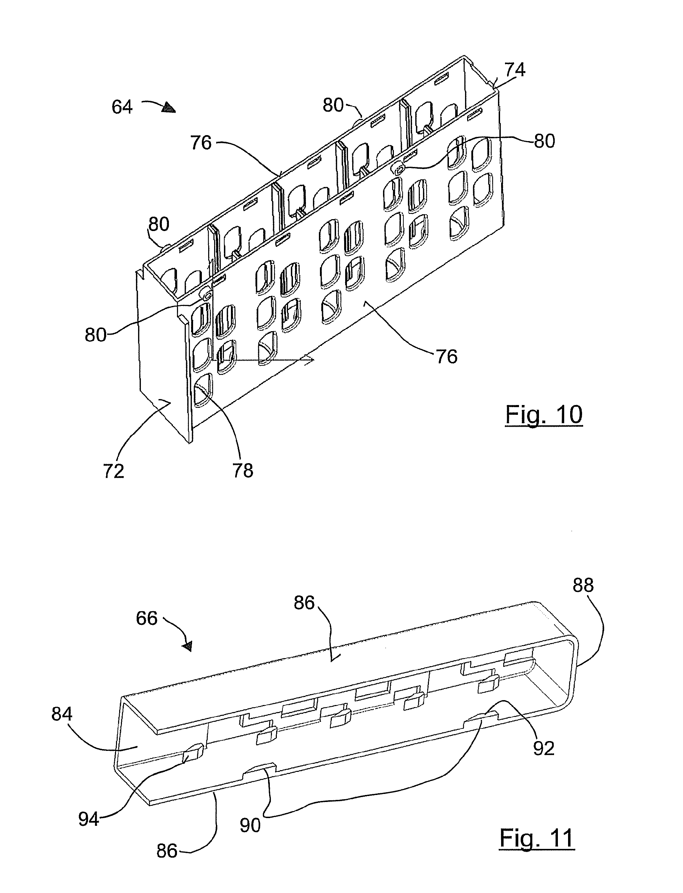

Dabei gelangen die Eingriffs-Vorsprünge 80 in einen Gleitanlageeingriff mit an der Innenseite der Seitenplatten 86 angebrachten Eingriffs-Rampen 90, die in der Darstellung von Fig. 11 zu erkennen sind, so dass beim Aufschieben der Transportsicherung in die Richtung A auf die Reagenzbehälter-Anordnung 15 die Transportsicherung 66 von oben gegen die Reagenzbehälter-Anordnung 15 gedrückt wird.

Dann, wenn die Transportsicherung 66 die in den Figuren 12 und 13 dargestellten Verriegelungsposition erreicht hat, rasten die Eingriffs-Vorsprünge 80 in Eingriffsmulden 92 ein, die an den Eingriffsrampen 90 vorgesehen sind.

Wie vorstehend erwähnt, ist in den Figuren 12 und 13 das erfindungsgemäße Reagenz-Kit in einem Zustand dargestellt, in welchem sich die Transportsicherung 66 in der Verriegelungsposition befindet.

Fig. 13 zeigt den Gegenstand von Fig. 12, wobei ein Teil der Transportsicherung 66 entfernt wurde, um einen besseren Blick auf die Verschlüsse 14 und die verschiedenen Eingriffselemente 90, 80, 94, 46 zu gestatten.

Wie aus in den Figuren 12 und 13 hervorgeht, sind in diesem Zustand die Verschlussplatten 42 der Deckel 18 weitgehend von der Deckplatte 84 der Transportsicherung 66 verdeckt. Dabei drückt die Deckplatte 84 von oben gegen die Fixierungs-Elemente 57, so dass die Deckel 18 jeweils in der Transportsicherungsposition fixiert sind und nicht aus dieser heraus bewegt werden können, solange sich die Transportsicherung 66 in der Verriegelungsposition befindet.

Durch weiteres Verschieben der Transportsicherung 66 aus der Verriegelungsposition in die Richtung A (die Entriegelungsrichtung) können jedoch die Transportsicherung 66 in ihre Freigabeposition bewegt und dabei gleichzeitig die Deckel 18 in die jeweilige Verdunstungsschutzposition verstellt werden, wie im folgenden anhand der Figuren 14 bis 16 genauer erläutert wird.

Diese Figuren stellen jeweils einen Teil desjenigen Reagenzbehälters 12 der Reagenzbehälter-Anordnung 15, der in den Figuren 12 und 13 der Stirnplatte 72 der Reagenzkassette 64 am nächsten ist, sowie einen Teil der Transportsicherung 66 dar. Von der Transportsicherung 66 wurde einen Teil der Deckplatte 84 und ein Teil der dem Betrachter näheren Seitenwand 86 entfernt, um den Blick auf den Verschluss 14 des Reagenzbehälters 12 sowie auf die Eingriffselemente 94 freizugeben. Weiter wurde aus Gründen der Übersichtlichkeit auf die Darstellung der Reagenzkassette verzichtet.

An der Innenseite jeder Seitenwand 86 der Transportsicherung 66 ist in der Nähe der Deckplatte 84 für jeden Reagenzbehälter 12 jeweils ein rampenartig ausgebildetes Eingriffselement 94 vorgesehen, das beim Verschieben der Transportsicherung 66 relativ zur Reagenzbehälter-Anordnung von der Verriegelungsposition in die Entriegelungsrichtung A in einen Gleitanlageeingriff mit einem der Gegeneingriffselemente 56 kommt, die an dem Deckel 18 vorgesehen sind.

Durch weiteres Verschieben der Transportsicherung 66 in die Entriegelungsrichtung A wird, wie in Fig. 15 dargestellt ist, der Deckel 18 durch die rampenartig ausgebildeten Eingriffselemente 94 im Zusammenwirken mit den zugehörigen Gegeneingriffselementen 56 angehoben und leicht in eine Öffnungsrichtung verschwenkt.

Um Platz für die sich dabei nach oben bewegenden Fixierungs-Elemente 57 zu bieten, ist in der Deckelplatte 84 der Transportsicherung 66 für jeden der Deckel 18 eine Öffnung 96 vorgesehen.

Diejenigen Öffnungen 96, die in der Verriegelungsposition oberhalb der Eingriffs-Vorsprünge 80 angeordnet sind, können zur Sichtfenstern 97 erweitert sein, die dem Anwender den Blick auf die Eingriffsvorsprünge 80 ermöglichen und ihm damit erlauben, festzustellen, ob die Transportsicherung 66 beispielsweise in der Verriegelungsposition korrekt auf der Reagenzkassette 64 sitzt.

Ferner können gewünschtenfalls auch oberhalb der rampenartig ausgebildeten Eingriffselemente 94 kleinere Sichtfenster 98 (vgl. Fig. 9) in der Deckplatte 84 der Transportsicherung 66 vorgesehen sein, welche einen Blick auf die Eingriffselemente 94 erlauben und es einem Anwender ermöglichen, das Zusammenwirken zwischen den Eingriffselementen 94 und den Gegeneingriffselementen 56 zu beobachten. Die Erweiterung der Öffnungen 96 zu Sichtfenstern 97 und die Sichtfenster 98 sind jedoch nicht zwingend erforderlich.

Aus der in Fig. 16 dargestellten Freigabeposition kann die Transportsicherung 66 von der Reagenzkassette 64 abgenommen werden. Die Reagenzkassette 64 mit den darin angeordneten Reagenzbehältern 12, d.h. die Reagenzbehälter-Anordnung 15 kann anschließend in ein System zur automatischen Analyse eingesetzt werden. Die Transportsicherung 66 kann wiederverwendet werden, beispielsweise durch erneutes Aufschieben auf eine Reagenzkassette 64.

Da die Deckel 18 der Reagenzbehälter 12 durch das Entfernen der Transportsicherung 66 bereits von der Transportsicherungsposition in die Verdunstungsschutzposition bewegt worden sind, können die Deckel 18, wie in den Figuren 7 und 8 dargestellt, nun mit geringem Kraftaufwand vom Analysesystem geöffnet werden.

Auch wenn in dem in den Figuren dargestellten Ausführungsbeispiel die Entriegelungsrichtung A der Richtung entspricht, in der die Transportsicherung auf die Reagenzbehälter-Anordnung aufgeschoben wird, ist es natürlich auch möglich, das Reagenz-Kit so zu gestalten, dass die Transportsicherung in eine Richtung auf die Reagenzbehälter-Anordnung aufgeschoben wird, die entgegengesetzt zur Entriegelungsrichtung verläuft, beispielsweise indem Eingriffsrampen an der Transportsicherung zur Befestigung an der Reagenzbehälter-Anordnung vorgesehen werden, die in die andere Richtung ansteigen, als die Eingriffsrampen 90 und indem die Transportsicherung an der Stirnseite offen ausgebildet ist.

In einer alternativen, hier nicht dargestellten Ausführungsform kann der Bereich der Deckplatte der Transportsicherung, welcher die Deckel während des Transports (also in der Verriegelungsposition der Transportsicherung) herunter drückt, zu schmalen Stegen reduziert werden, wobei die Öffnungen, die den Öffnungen 96 des in den Figuren dargestellten Beispiels entsprechen, soweit vergrößert sind, dass in der Freigabeposition der Transportsicherung eine Öffnung der Deckel durch das Analysesystem auch bei aufgesetzter Transportsicherung ermöglicht ist. Die vorstehend angesprochenen Stege könnten dabei in der Freigabeposition zwischen benachbarten Deckeln positioniert sein, so dass sie die Öffnung der Deckel nicht behindern. Eine solche Transportsicherung kann dauerhaft, insbesondere auch im Analysebetrieb auf der Reagenzbehälter-Anordnung verbleiben.

Um den Verstellweg zwischen der Verriegelungsposition und der Freigabeposition zu begrenzen, kann dabei vorgesehen sein, dass die Stege bei der Entriegelung über das der jeweiligen Deckelachse gegenüberliegende freie Deckelende bewegt werden, also genau in die entgegengesetzte Richtung, wie bei dem in den Figuren dargestellten Ausführungsbeispiel. Dazu können die rampenartigen Eingriffselemente der Transportsicherung, die die Deckel im Zusammenwirken mit den Gegeneingriffselementen beim Entriegeln anheben, an etwas anderer Stelle und mit in die jeweils andere Richtung ansteigenden Rampen ausgebildet sein, als die Eingriffselemente 94 des ersten Ausführungsbeispiels. Auf diese Weise kann der Verstellweg auf ca. 5-7mm begrenzt werden.

Schließlich ist es bei allen beschriebenen Ausführungsbeispielen möglich, Rastelemente an Transportsicherung und Reagenzbehälter-Anordnung vorzusehen, um ein unbeabsichtigtes Bewegen der Transportsicherung aus der Verriegelungsposition oder/und aus der Freigabeposition heraus zu verhindern.

## Patentansprüche

1. Reagenz-Kit (10), umfassend:
- eine Reagenzbehälter-Anordnung (15) mit wenigstens einem Reagenzbehälter (12) zum Aufnehmen einer Substanz, welcher wenigstens einen Behälterkörper (13) und wenigstens einen dem Behälterkörper zugeordneten und an diesem anbringbaren oder vorgesehenen Verschluss (14) umfasst, wobei der Verschluss (14) einen Verschluss-Grundkörper (16) und einen Deckel (18) umfasst, der zumindest zwischen einer geschlossenen Deckelposition und einer weiteren Deckelposition bewegbar am Verschluss-Grundkörper (16) gelagert ist, sowie
- eine Transportsicherung (66), die in einer Verriegelungsposition an der Reagenzbehälter-Anordnung (15) anbringbar oder angebracht ist und die von der Verriegelungsposition in eine Freigabeposition relativ zur Reagenzbehälter-Anordnung (15) bewegbar ist, wobei die Transportsicherung (66) in der Verriegelungsposition den Deckel (18) in der geschlossenen Deckelposition fixiert,
**dadurch gekennzeichnet, dass** durch ein Bewegen der Transportsicherung (66) von der Verriegelungsposition in die Freigabeposition relativ zu der Reagenzbehälter-Anordnung (15) der Deckel (18) von der geschlossenen Deckelposition in die weitere Deckelposition bewegt wird.

2. Reagenz-Kit (10) nach Anspruch 1,
**dadurch gekennzeichnet, dass** die Transportsicherung (66) aus der Freigabeposition heraus von der Reagenzbehälter-Anordnung (15) entfernbar ist.

3. Reagenz-Kit nach Anspruch 1 oder 2,
**dadurch gekennzeichnet, dass** die weitere Deckelposition eine geöffnete Deckelposition ist.

4. Reagenz-Kit (10) nach Anspruch 1 oder 2,
**dadurch gekennzeichnet, dass** die weitere Deckelposition eine Verdunstungsschutzposition ist und die geschlossene Deckelposition eine Transportsicherungsposition ist, wobei der Deckel (18) zwischen der Transportsicherungsposition, der Verdunstungsschutzposition und einer geöffneten Deckelposition bewegbar am Verschluss-Grundkörper (16) gelagert ist.

5. Reagenz-Kit nach Anspruch 3,
**dadurch gekennzeichnet, dass** es weiter Vorspann-Mittel zum Vorspannen des Deckels von der geöffneten Deckelposition zu der geschlossenen Deckelposition hin umfasst.

6. Reagenz-Kit (10) nach Anspruch 4,
**dadurch gekennzeichnet, dass** es weiter Vorspann-Mittel (40) zum Vorspannen des Deckels (18) von der geöffneten Deckelposition zu der Verdunstungsschutzposition hin umfasst.

7. Reagenz-Kit (10) nach Anspruch 5 oder 6,
**dadurch gekennzeichnet, dass** die Vorspann-Mittel (40) einteilig mit dem Verschluss-Grundkörper (16) ausgebildet sind.

8. Reagenz-Kit (10) nach einem der vorhergehenden Ansprüche,
**dadurch gekennzeichnet, dass** der Deckel (18) um eine Deckelachse (18a) schwenkbar am Verschluss-Grundkörper (16) gelagert ist.

9. Reagenz-Kit (10) nach Anspruch 8,
**dadurch gekennzeichnet, dass** die Transportsicherung (66) durch Verschieben relativ zu der Reagenzbehälter-Anordnung (15) in eine Entriegelungsrichtung (A) von der Verriegelungsposition in die Freigabeposition bewegbar ist, wobei die Transportsicherung (66) wenigstens ein rampenartig ausgebildetes Eingriffselement (94) und der Deckel (18) wenigstens ein Gegeneingriffselement (56) umfasst, das so mit dem Eingriffselement (94) zusammenwirkt, dass beim Verschieben der an der Reagenzbehälter-Anordnung (15) angebrachten Transportsicherung (66) von der Verriegelungsposition in die Entriegelungsrichtung (A) das Eingriffselement (94) und das Gegeneingriffselement (56) in einem Gleitanlageeingriff miteinander stehen oder in einen Gleitanlageeingriff gelangen, so dass durch Verschieben der Transportsicherung (66) in die Entriegelungsrichtung (A) in die Freigabeposition der Deckel (18) von der geschlossenen Deckelposition in die weitere Deckelposition bewegbar ist.

10. Reagenz-Kit (10) nach einem der vorhergehenden Ansprüche,
**dadurch gekennzeichnet, dass** die Reagenzbehälter-Anordnung (15) mehrere Reagenzbehälter (12), vorzugsweise 3 bis 5 Reagenzbehälter umfasst, und wobei durch das Bewegen der Transportsicherung (66) von der Verriegelungsposition in die Freigabeposition die Deckel (18) der Reagenzbehälter (12) jeweils von der geschlossenen Deckelposition in die weitere Deckelposition bewegt werden.

11. Reagenz-Kit (10) nach Anspruch 10 in Kombination mit den Ansprüchen 8 und 9
**dadurch gekennzeichnet, dass** die Reagenzbehälter (12) in einer Reihe entlang der Entriegelungsrichtung (A) angeordnet sind, wobei die Deckelachsen (18a) der an den Reagenzbehältern (12) angebrachten oder vorgesehenen Deckel (18) im Wesentlichen orthogonal zur Entriegelungsrichtung (A) verlaufen.

12. Reagenz-Kit (10) nach einem der vorhergehenden Ansprüche
**dadurch gekennzeichnet, dass** die Reagenzbehälter-Anordnung (15) weiter eine Reagenz-Kassette (64) umfasst, an welcher der bzw. die Reagenzbehälter (12) anbringbar oder vorgesehen ist bzw. sind.
